# EUROPEAN PATENT APPLICATION

(11) **EP 4 703 180 A1**
(43) Date of publication of application: **04.03.2026**
(21) Application number: 25196938.2
(22) Date of filing: 20.08.2025
(51) Int. Cl.: B60L 3/00, B60L 3/04, B60L 3/12, B60L 53/14, B60L 53/16, B60L 53/18, B60L 53/30, B60L 53/62, B60L 55/00, H02H 3/00, H02H 3/08, H02H 3/10, H02H 3/20, H02H 5/04, H02H 9/00, H02H 9/02, H01H 83/02, H02H 1/00, H02H 3/16, H02J 7/00, H01H 83/20

(54) **ELECTRIC VEHICLE SUPPLY EQUIPMENT (EVSE) INTEGRATED WITH ELECTRONIC CIRCUIT BREAKER**

(30) Priority: 26.08.2024 US 202418815210
(71) Applicant: Siemens Industry, Inc., Alpharetta, Georgia 30005-4437 (US)
(72) Inventor: Lewis, Curt, Johns Creek, GA, 30022 (US); Yeruva, Sesha Devasena, Duluth, GA, 30096 (US); Yang, Guang, Johns Creek, GA, 30097 (US); Ray, Jesse, Stone Mountain, GA, 30083 (US)
(74) Representative: Isarpatent

(57) **Abstract**

An electric vehicle supply equipment (EVSE) using a solid-state circuit breaker (SSCB) with an integrated Electric Vehicle (EV) charging interface disposed within a distribution panel allows power to and from an electric vehicle. The EVSE solid-state circuit breaker further detects arcing on EV load connections or leakage current through ground and disengaging based on an arcing signature or leakage levels through ground. It uses proven materials and technologies that are produced at high volumes, hence taking advantage of economies of scale. Product will be compact in nature and housed in a standard building load center, eliminating the need for an external housing.

## Description

### BACKGROUND

### 1. Field

Aspects of the present disclosure generally relate to a compact electric vehicle supply equipment (EVSE) with such switching and packaging technology.

### 2. Description of the Related Art

Circuit breakers are essential for electrical safety. They feed current to loads that are connected to them and interrupt the circuit once a circuit fault such as an overload, a short circuit, a ground fault and an arc fault is detected. Due to the nature of carrying current heat is generated inside circuit breakers and this is especially significant for solid state-based circuit breakers. Solid-state circuit breakers (SSCBs) have advantages, such as fast interruption, easy integration to control circuit and so on. Solid-state electronic circuit breaker removes the need for an arc extinguishing chamber and long contact separation distance seen in a traditional residential circuit breaker. These space-consuming features were required in a traditional breaker to help extinguishing arc. However, in a solid-state breaker, there is no arc. The solid-state electronics utilizes semiconductors and software algorithms to detect and interrupt fault currents substantially faster than a traditional residential circuit breaker. Since it does not rely on contact separation to interrupt a fault current, it is not necessary to have numerous components utilized in the operating mechanism of a traditional breaker. There still needs to be a small separation in the circuit between contacts, or air gap, for dielectric safety purposes when the breaker is tripped or turned off. However, since the solid-state electronics take most of the space inside the breaker, there is an extremely limited amount of space to accommodate an operating mechanism.

An electric vehicle supply equipment (EVSE) supplies electricity to an electric vehicle (EV) being a load. Commonly called charging stations or charging docks, they provide electric power to the electric vehicle and use that to recharge the vehicle's batteries. The EVSE is an element in an infrastructure that supplies electric energy for the recharging of plug-in electric vehicles-including electric cars, neighborhood electric vehicles and plug-in hybrids. Charging stations provide a range of heavy duty or special connectors that conform to the variety of standards. Installation and wiring of EVSEs at site require additional measures and cost. However, size and cost of the SSCBs and EVSEs also varies and need materials and technologies that are capable.

Therefore, there is a need for using proven materials and technologies that are produced at high volumes, hence taking advantage of economies of scale. An integrated solution further lowers installation cost, and advances electrification of charging infrastructure.

### SUMMARY

Briefly described, aspects of the present disclosure relate to a combination of solid-state circuit breakers (SSCBs) and electric vehicle supply equipment (EVSEs). The safety functions within the breaker are further utilized and customized for power transfer to and from Electric vehicle. Utilizing solid state breaker technology further allows additional diagnosing of EV loads and prevent failures at point of load distribution instead of load, improving safety.

In accordance with one illustrative embodiment of the present disclosure, an electric vehicle supply equipment (EVSE) solid-state circuit breaker (SSCB) with an integrated Electric Vehicle (EV) charging interface is disposed within a distribution panel that allows power to and from an electric vehicle. The EVSE solid-state circuit breaker further detects arcing on EV load connections or leakage current through ground and disengaging based on an arcing signature or leakage levels.

In accordance with one illustrative embodiment of the present disclosure, an EVSE solid-state circuit breaker comprises one or more integrated Electric Vehicle (EV) charging interfaces that allow power to one or more Electric vehicles (EVs) and a monitor that monitors current levels on each EV and indicate to the EV to adjust power levels to avoid exceeding a breaker current capacity and avoid overload conditions on a busbar.

In accordance with one illustrative embodiment of the present disclosure, an EVSE solid-state circuit breaker comprises an integrated EV charging interface that monitors a signature of a current flowing to an Electric Vehicle (EV) to determine if the health of a battery is deteriorating.

The above described features and advantages, as well as others, will become more readily apparent to those of ordinary skill in the art by reference to the following detailed description and accompanying drawings. While it would be desirable to provide one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates a block diagram of an electrical distribution system including an electric vehicle supply equipment (EVSE) solid-state circuit breaker (SSCB) disposed in a distribution panel for supplying bi-directional power to and from an Electric Vehicle (EV) in accordance with an exemplary embodiment of the present disclosure.
FIG. 2 illustrates a block diagram of an electrical distribution system including an EVSE solid-state circuit breaker and a solid-state circuit breaker coupled to a coupler for supplying bi-directional power to and from an EV in accordance with an exemplary embodiment of the present disclosure.
FIG. 3 illustrates a block diagram of an electrical distribution system including an EVSE solid-state circuit breaker and two solid-state circuit breakers where the EVSE solid-state circuit breaker communicates to a local or a remote controller that sends commands in accordance with an exemplary embodiment of the present disclosure.
FIG. 4 illustrates a block diagram of an electrical distribution system including an EVSE solid-state circuit breaker comprising one or more integrated EV charging interfaces and a monitor that monitors current levels in accordance with an exemplary embodiment of the present disclosure.
FIG. 5 illustrates a block diagram of an electrical distribution system including an EVSE solid-state circuit breaker comprising an integrated EV charging interface and a current monitor in accordance with an exemplary embodiment of the present disclosure.
FIG. 6 illustrates a schematic view of a flow chart of a method of providing an electric vehicle supply equipment (EVSE) solid-state circuit breaker (SSCB) with an integrated Electric Vehicle (EV) charging interface in accordance with an exemplary embodiment of the present disclosure.
FIG. 7 illustrates a block diagram of an EVSE solid state circuit breaker in accordance with an exemplary embodiment of the present disclosure.

### DETAILED DESCRIPTION

Various technologies pertain to a combination of solid-state circuit breakers (SSCBs) and electric vehicle supply equipment (EVSEs). An electric vehicle supply equipment (EVSE) is partially or fully integrated into a solid-state circuit breaker. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

To facilitate an understanding of embodiments, principles, and features of the present disclosure, they are explained hereinafter with reference to implementation in illustrative embodiments. In particular, they are described in the context of an electric vehicle supply equipment (EVSE) integrated in a solid-state circuit breaker. Embodiments of the present disclosure, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present disclosure.

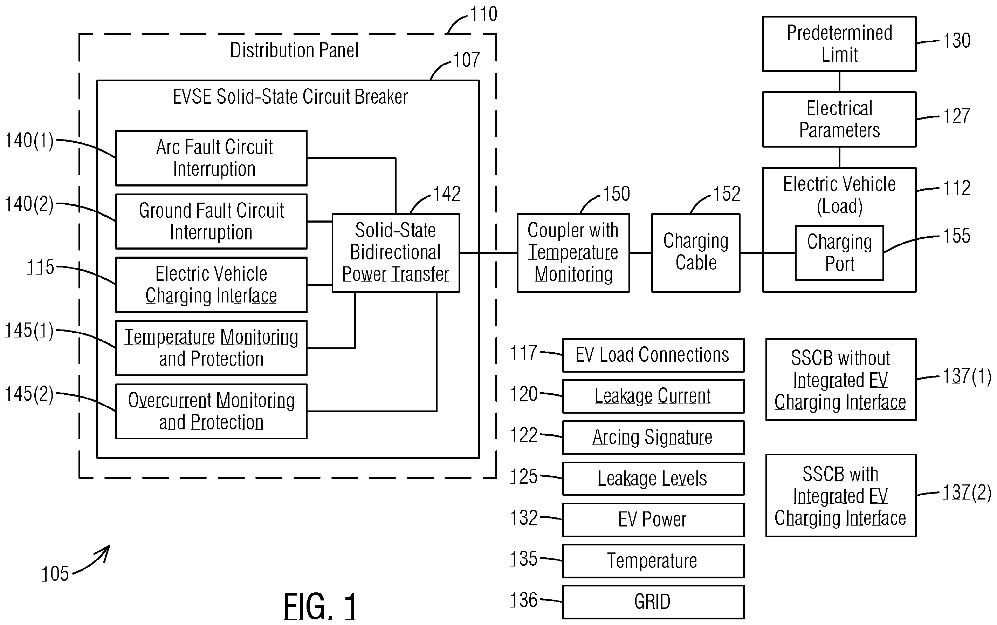

These and other embodiments of the solid-state circuit breaker (SSCB) with an electric vehicle supply equipment (EVSE) according to the present disclosure are described below with reference to FIGs. 1-xx herein. Like reference numerals used in the drawings identify similar or identical elements throughout the several views. The drawings are not necessarily drawn to scale.

Consistent with one embodiment of the present disclosure, FIG. 1 represents a block diagram of an electrical distribution system 105 including an electric vehicle supply equipment (EVSE) solid-state circuit breaker (SSCB) 107 disposed in a distribution panel 110 for supplying bi-directional power to and from an Electric Vehicle (EV) 112 in accordance with an exemplary embodiment of the present disclosure.

The electric vehicle supply equipment (EVSE) solid-state circuit breaker (SSCB) 107 includes an integrated Electric Vehicle (EV) charging interface 115 disposed within the distribution panel 110 that allows power to and from the Electric Vehicle (EV) 112. The EVSE solid-state circuit breaker 107 further detects arcing on EV load connections 117 or leakage current 120 through ground and disengaging based on an arcing signature 122 or leakage levels 125. The EVSE solid-state circuit breaker 107 with the integrated EV charging interface 115 further detects arcing on EV connections or the leakage current through ground and disengaging based on the arcing signature or the leakage levels.

The EVSE solid-state circuit breaker 107 with the integrated EV charging interface 115 disposed within its enclosure (not shown) further allows power supplied by the EV 112 back into the electrical distribution system 105 when one or more of electrical parameters 127 - voltage, current, frequency is within a predetermined limit 130.

The EVSE solid-state circuit breaker 107 with the integrated EV charging interface 115 provides an isolation between an EV power 132 feeding the loads on the distribution panel 110 and power feeding a grid 136.

The EVSE solid-state circuit breaker 107 with the integrated EV charging interface 115 communicates to a solid-state circuit breaker without an EVSE interface that is also connected to the same EV 112, further connecting, or disconnecting power to the EV 112 utilizing one or more solid state circuit breakers.

The EVSE solid-state circuit breaker 107 with the integrated EV charging interface 115 monitors a temperature 135 on the load contacts or cable and adjusting the power or disengaging when temperature limits are exceeded.

The integrated EV charging interface 115 or an EVSE interface is located within a breaker enclosure allowing a solid-state circuit breaker without integrated EV interface 137(1) to be replaced by a solid-state circuit breaker with an EV charging interface 137(2) or the solid-state circuit breaker with an integrated EV charging interface 137(2) to be replaced by the solid-state circuit breaker without an EV charging interface 137(1).

The EVSE solid-state circuit breaker 107 with the integrated EV charging interface 115 within its enclosure measures an internal temperature of the solid-state circuit breaker with an integrated EV charging interface and adjusting the power to the EV or disengaging based on a rate of change of temperature.

The EVSE solid-state circuit breaker 107 includes an arc fault circuit interruption 140(1) and a ground fault circuit interruption 140(2) connected to a solid-state bidirectional power transfer 142. The integrated EV charging interface 115 is also coupled to the solid-state bidirectional power transfer 142. The EVSE solid-state circuit breaker 107 further includes a temperature monitoring and protection 145(1) and an overcurrent monitoring and protection 145(2) both being connected to the solid-state bidirectional power transfer 142. The solid-state bidirectional power transfer 142 is coupled to a coupler 150 with temperature monitoring. The coupler 150 is coupled to a charging cable 152 and further connected to a charging port 155.

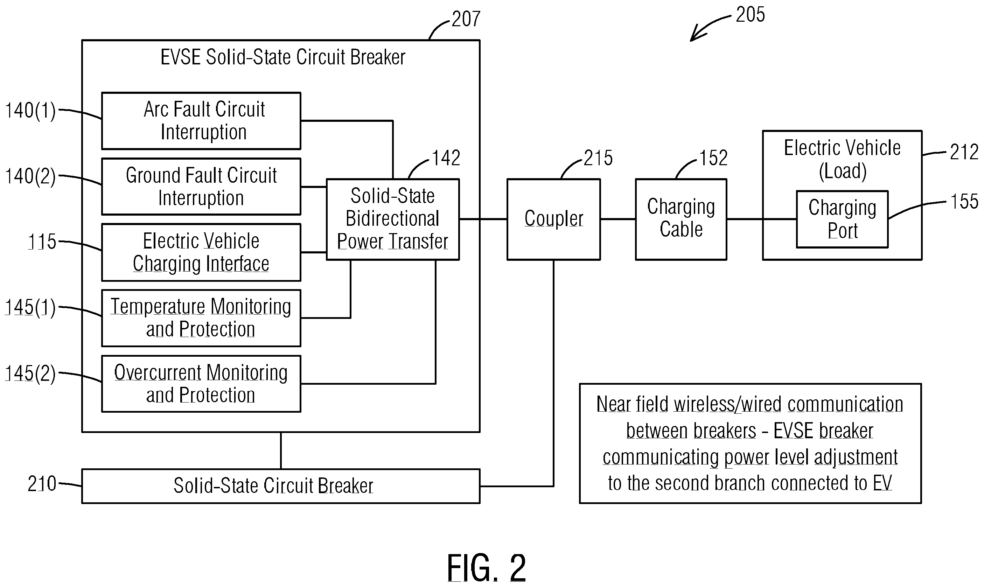

Referring to FIG. 2, it illustrates a block diagram of an electrical distribution system 205 including an EVSE solid-state circuit breaker 207 and a solid-state circuit breaker 210 coupled to a coupler 215 for supplying bi-directional power to and from an EV 212 in accordance with an exemplary embodiment of the present disclosure.

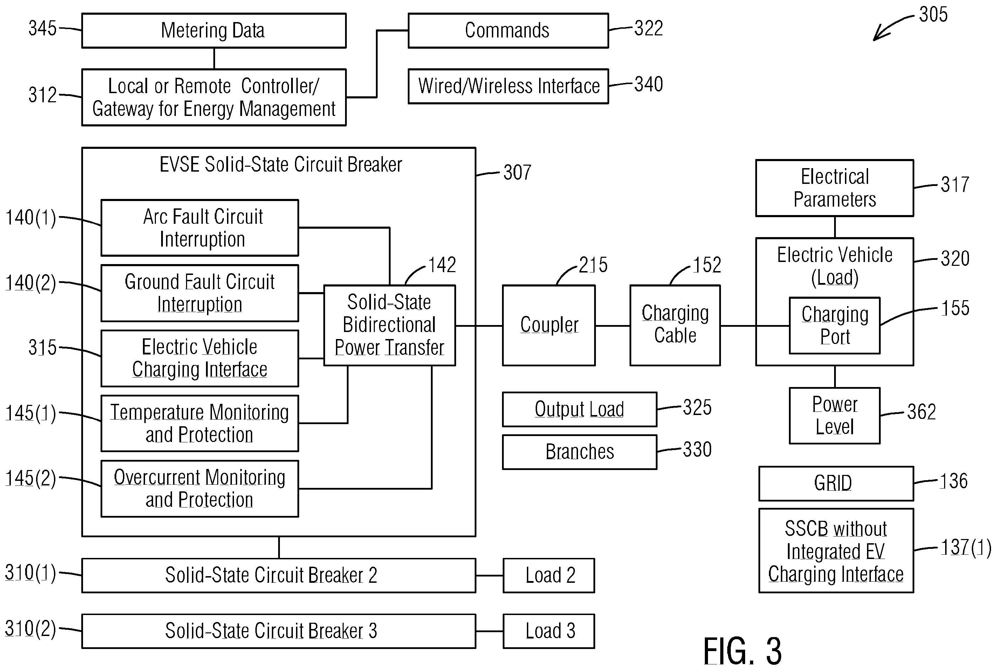

Turning now to FIG. 3, it illustrates a block diagram of an electrical distribution system 305 including an EVSE solid-state circuit breaker 307 and two solid-state circuit breakers 310(1-2) where the EVSE solid-state circuit breaker 307 communicates to a local or a remote controller 312 that sends commands 322 in accordance with an exemplary embodiment of the present disclosure.

The EVSE solid-state circuit breaker 307 with an integrated EV charging interface 315 measures electrical parameters 317 of an EV 320 and communicates to the local or the remote controller 312 that sends the commands 322 to EVSE solid-state circuit breakers in the electrical distribution system 305 to adjust an output load 325 on one or more branches 330 to limit power usage.

The EVSE solid-state circuit breaker 307 with the integrated EV charging interface 315 allows power to and from an electric vehicle 320, wherein the power from the electric vehicle 320 can be fed back to loads connected to the electrical distribution system 305 or allowed to flow back to the grid 136.

The EVSE solid-state circuit breaker 307 with the integrated EV charging interface 315 communicates via a wired or a wireless interface 340 to allow communications to other EVSE solid-state circuit breakers within a distribution panel, allowing a power level 362 to be adjusted to one or more loads within the distribution panel.

The EVSE solid-state circuit breaker 307 with the integrated EV charging interface 315 communicates via the wired or a wireless interface 340 to a gateway or a controller device that collects metering data 345 and sends commands to EVSE solid-state circuit breakers or the load equipment to adjust a power level to one or more loads within the distribution panel.

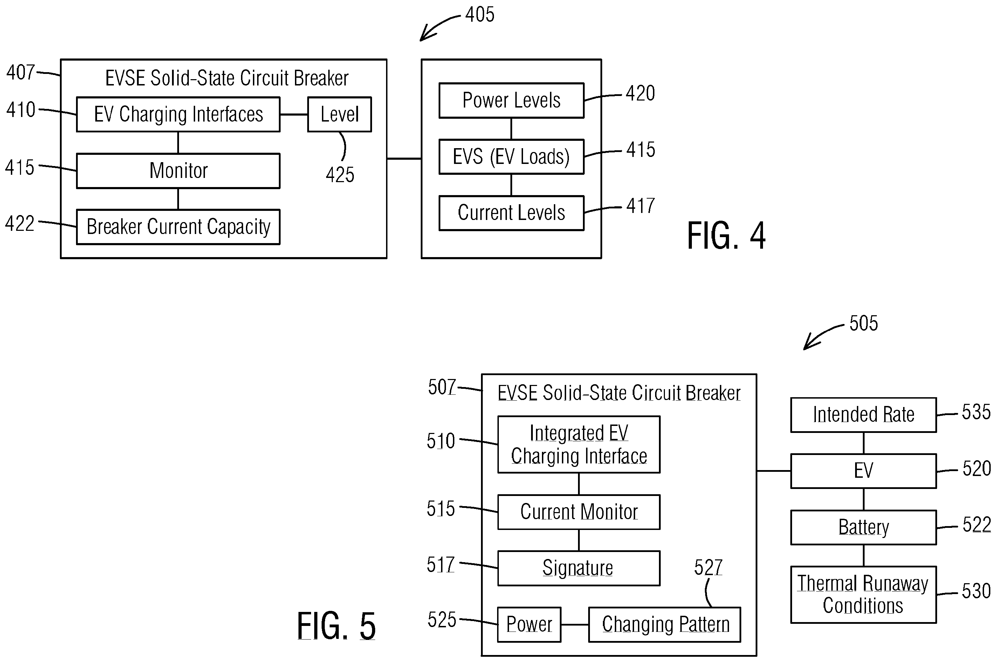

FIG. 4 illustrates a block diagram of an electrical distribution system 405 including an EVSE solid-state circuit breaker 407 comprising one or more integrated EV charging interfaces 410 that allow power to one or more Electric vehicles (EVs) 412 and a monitor 415 that monitors current levels 417 on each EV 412 and indicate to the EV 412 to adjust power levels 420 to avoid exceeding a breaker current capacity 422 in accordance with an exemplary embodiment of the present disclosure. The EVSE solid-state circuit breaker 407 disengages one of EV loads when current drawn exceeds a level 425 indicated by the EV charging interface.

As seen in FIG. 5, it illustrates a block diagram of an electrical distribution system 505 including an EVSE solid-state circuit breaker 507 comprising an integrated EV charging interface 510 and a current monitor 515 in accordance with an exemplary embodiment of the present disclosure. The integrated EV charging interface 510 monitors a signature 517 of a current flowing to an Electric Vehicle (EV) 520 to determine if the health of a battery 522 is deteriorating. The EVSE solid-state circuit breaker 507 with the integrated EV charging interface 510 allows power 525 to flow to the EV 520 in a controlled pattern and monitor abnormalities in a charging pattern 527 to determine health of the battery 522 and avoid thermal runaway conditions 530 before the EV 520 is allowed to charge at an intended rate 535.

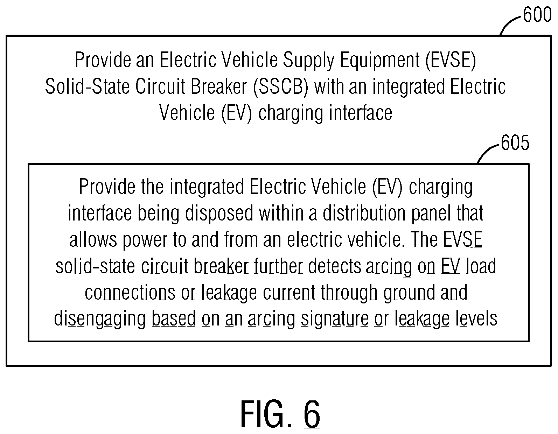

As shown in FIG. 6, it illustrates a schematic view of a flow chart of a method 600 of providing the electric vehicle supply equipment (EVSE) solid-state circuit breaker (SSCB) 107 with the integrated Electric Vehicle (EV) charging interface 115 in accordance with an exemplary embodiment of the present disclosure. Reference is made to the elements and features described in FIGs. 1-5. It should be appreciated that some steps are not required to be performed in any particular order, and that some steps are optional.

For providing the electric vehicle supply equipment (EVSE) solid-state circuit breaker (SSCB) 107 with the integrated Electric Vehicle (EV) charging interface 115, the method 600 in step 605 provides the integrated Electric Vehicle (EV) charging interface 115 being disposed within the distribution panel 110 that allows power to and from the electric vehicle 112. The EVSE solid-state circuit breaker 107 further detects arcing on EV load connections or leakage current through ground and disengaging based on an arcing signature or leakage levels.

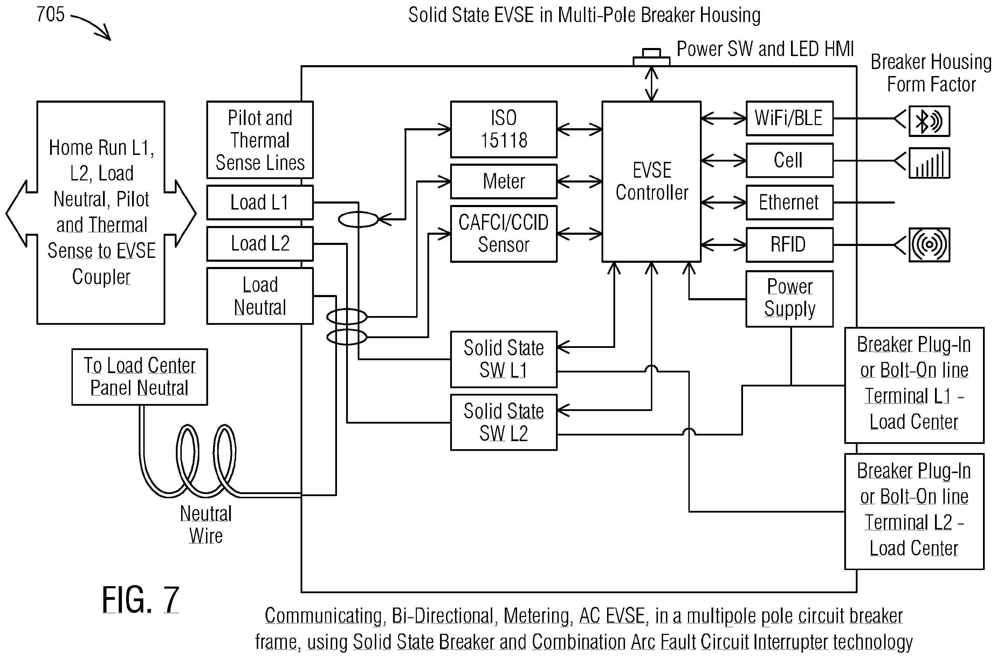

FIG. 7 illustrates a block diagram of an EVSE solid state circuit breaker 705 in accordance with an exemplary embodiment of the present disclosure. The EVSE solid state circuit breaker 705 is an extension of a solid-state breaker with capability to provide power to an EV without the need of a standalone Electric Vehicle Supply Equipment (EVSE). A standalone EVSE initiates charging an electric vehicle by closing a relay after a sequence of handshaking signals are established over a control pilot line between the EV and EVSE and no ground current leakage is detected. The EVSE could also stop charge transfer or not initiate a charge transfer in case of over current and over temperature conditions. The EVSE acts as a gateway to control power flow from line power through the breaker to the Electric vehicle. It closes an internal relay to allow the power to flow from the breaker output to the EV. This invention integrates the basic functions of an EV-EVSE interface with those of a solid-state breaker, where the breaker controls the power to the EV directly. The advantage of the invention is that safety functions within the breaker, like overcurrent protection, ground fault circuit interruption do not have to be replicated to accomplish the EVSE functions. In addition, an arc fault circuit interruption will allow additional protection for failure conditions related to arcing that can occur while inserting/detaching a connector to the EV.

The EVSE solid state circuit breaker 705 will include embedded wired and wireless communication interfaces as well as metering to allow for load management within a distribution panel through an energy management or power control system. In addition, each solid-state breaker with communication capability in the electrical distribution system can form a local network to establish usage limits or perform protective functions such as busbar overload protection, limiting import and export to/from grid etc. Multiple breaker branches can be utilized to power an EV with higher power than individual breaker capacity with single EVSE solid state breaker. This is especially crucial to manage peak demands and avoid disturbances in a grid when multiple sources like renewable or distributed energy resource (bidirectional EV) are utilized.

The EV charging interface don't need to be inside of the SSCB. A separately enclosed EV charging interface that communicates with the SSCB whether wirelessly or wired may be used. (They could both be located in the distribution panel or they could be located separately).

The advantages of this invention are it uses proven materials and technologies that are produced at high volumes, hence taking advantage of economies of scale. Product will be compact in nature and housed in a standard building load center, eliminating the need for an external housing. This reduces overall product cost.

While an integrated EV charging interface of an EVSE is described here a range of one or more other types of EV charging interface are also contemplated by the present disclosure. For example, other types of EV charging interface may be implemented based on one or more features presented above without deviating from the spirit of the present disclosure.

The techniques described herein can be particularly useful for a solid-state circuit breaker (SSCB). While particular embodiments are described in terms of a SSCB, the techniques described herein are not limited to such a circuit breaker but can also be used with other circuit breakers or configurations.

While embodiments of the present disclosure have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

**In** the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

### Further embodiments:

1. An electric vehicle supply equipment (EVSE) solid-state circuit breaker (SSCB) with an integrated Electric Vehicle (EV) charging interface being disposed within a distribution panel that allows power to and from an electric vehicle, wherein the EVSE solid-state circuit breaker further detects arcing on EV load connections or leakage current through ground and disengaging based on an arcing signature or leakage levels.
2. The EVSE solid-state circuit breaker of embodiment 1 with the integrated EV charging interface, measures electrical parameters of an EV and communicates to a local or a remote controller that sends commands to EVSE solid-state circuit breakers in an electrical distribution system to adjust an output load on one or more branches to limit power usage.
3. The EVSE solid-state circuit breaker of embodiment 2 with the integrated EV charging interface allows power to and from an electric vehicle, wherein the power from the electric vehicle can be fed back to loads connected to the electrical distribution system or allowed to flow back to a grid.
4. The EVSE solid-state circuit breaker of embodiment 1 with a separately enclosed EV charging interface that communicates with a SSCB either wirelessly or a wired manner, wherein they both be located in the distribution panel or they could be located separately.
5. The EVSE solid-state circuit breaker of embodiment 2 with the integrated EV charging interface disposed within its enclosure, further allows power supplied by the EV back into the electrical distribution system when one or more of the electrical parameters - voltage, current, frequency is within a predetermined limit.
6. The EVSE solid-state circuit breaker of embodiment 2 with the integrated EV charging interface, provides an isolation between an EV power feeding the loads on the distribution panel and power feeding the grid.
7. The EVSE solid-state circuit breaker of embodiment 1 with the integrated EV charging interface, communicates via a wired or a wireless interface to allow communications to other solid-state circuit breakers within the distribution panel, allowing a power level to be adjusted to one or more loads within the distribution panel, further limiting the total energy consumed by the loads in the distribution panel.
8. The EVSE solid-state circuit breaker of embodiment 7 with the integrated EV charging interface, wherein the EVSE solid-state circuit breaker communicates to a solid-state circuit breaker without an EVSE interface that is also connected to the same EV, further connecting, or disconnecting power to the EV utilizing one or more solid state circuit breakers.
9. The EVSE solid-state circuit breaker of embodiment 1 with the integrated EV charging interface, further monitoring temperature on the load contacts or cable and adjusting the power or disengaging when temperature limits are exceeded.
10. The EVSE solid-state circuit breaker of embodiment 1 with the integrated EV charging interface, communicates via a wired or a wireless interface to a gateway or a controller device that collects metering data and sends commands to EVSE solid-state circuit breakers or the load equipment to adjust a power level to one or more loads within the distribution panel.
11. The EVSE solid-state circuit breaker of embodiment 1 with the integrated EV charging interface, wherein the integrated EV charging interface or an EVSE interface is located within a breaker enclosure allowing a solid-state circuit breaker without integrated EV interface to be replaced by a solid-state circuit breaker with an EV charging interface or a solid-state circuit breaker with an integrated EV charging interface to be replaced by a solid-state circuit breaker without an EV charging interface.
12. The EVSE solid-state circuit breaker of embodiment 1 with the integrated EV charging interface within its enclosure measures an internal temperature of the solid-state circuit breaker with an integrated EV charging interface and adjusting the power to the EV or disengaging based on a rate of change of temperature.
13. An EVSE solid-state circuit breaker comprising:
   one or more integrated Electric Vehicle (EV) charging interfaces that allow power to one or more Electric vehicles (EVs); and
   a monitor that monitors current levels on each EV and indicate to the EV to adjust power levels to operate within a breaker current capacity.
14. The EVSE solid-state circuit breaker of embodiment 13, further disengages one of EV loads when current drawn exceeds a configured level.
15. An EVSE solid-state circuit breaker comprising:
   an integrated EV charging interface that monitors a signature of a current flowing to an Electric Vehicle (EV) to determine if the health of a battery is deteriorating.
16. The EVSE solid-state circuit breaker of embodiment 15 with the integrated EV charging interface, allows power to flow to the EV in a controlled pattern and monitor abnormalities in a charging pattern to determine health of the battery and avoid thermal runaway conditions before the EV is allowed to charge at an intended rate.
17. A method, comprising:
   providing an electric vehicle supply equipment (EVSE) solid-state circuit breaker (SSCB) with an integrated Electric Vehicle (EV) charging interface being disposed within a distribution panel that allows power to and from an electric vehicle, wherein the EVSE solid-state circuit breaker further detects arcing on EV load connections or leakage current through ground and disengaging based on an arcing signature or leakage levels.
18. The method of embodiment 17, wherein the integrated EV charging interface communicates via a wired or a wireless interface to other EVSE solid-state circuit breakers, allowing a power level to be adjusted to one or more loads, further limiting the peak demand at a site.
19. The method of embodiment 17, wherein the integrated EV charging interface further monitors temperature on the load contacts or cable and adjusts the power or disengages when temperature limits are exceeded.
20. The method of embodiment 17, wherein the integrated EV charging interface communicates via a wired or a wireless interface to a gateway or a controller device that collects metering data and sends commands to EVSE solid-state circuit breakers or the load equipment to adjust a power level to one or more loads within the distribution panel such that metering accuracy is enhanced with remote voltage sensing at the end of the Home Run Load Wires and voltage sensing information is communicated via a wired or a wireless interface to the device that supports meter function.

## Claims

1. An electric vehicle supply equipment -EVSE- solid-state circuit breaker -SSCB-with an integrated Electric Vehicle -EV- charging interface being disposed within a distribution panel that allows power to and from an electric vehicle, wherein the EVSE solid-state circuit breaker further detects arcing on EV load connections or leakage current through ground and disengaging based on an arcing signature or leakage levels.

2. The EVSE solid-state circuit breaker of claim 1 with the integrated EV charging interface, measures electrical parameters of an EV and communicates to a local or a remote controller that sends commands to EVSE solid-state circuit breakers in an electrical distribution system to adjust an output load on one or more branches to limit power usage.

3. The EVSE solid-state circuit breaker of claim 2 with the integrated EV charging interface allows power to and from an electric vehicle, wherein the power from the electric vehicle can be fed back to loads connected to the electrical distribution system or allowed to flow back to a grid.

4. The EVSE solid-state circuit breaker according to any of the preceding claims with a separately enclosed EV charging interface that communicates with a SSCB either wirelessly or a wired manner, wherein they both be located in the distribution panel or they could be located separately.

5. The EVSE solid-state circuit breaker of claim 2 with the integrated EV charging interface disposed within its enclosure, further allows power supplied by the EV back into the electrical distribution system when one or more of the electrical parameters - voltage, current, frequency is within a predetermined limit.

6. The EVSE solid-state circuit breaker of claim 2 with the integrated EV charging interface, provides an isolation between an EV power feeding the loads on the distribution panel and power feeding the grid.

7. The EVSE solid-state circuit breaker according to any of the preceding claims with the integrated EV charging interface, communicates via a wired or a wireless interface to allow communications to other solid-state circuit breakers within the distribution panel, allowing a power level to be adjusted to one or more loads within the distribution panel, further limiting the total energy consumed by the loads in the distribution panel,
in particular with the integrated EV charging interface, wherein the EVSE solid-state circuit breaker communicates to a solid-state circuit breaker without an EVSE interface that is also connected to the same EV, further connecting, or disconnecting power to the EV utilizing one or more solid state circuit breakers.

8. The EVSE solid-state circuit breaker according to any of the preceding claims with the integrated EV charging interface, further monitoring temperature on the load contacts or cable and adjusting the power or disengaging when temperature limits are exceeded.

9. The EVSE solid-state circuit breaker according to any of the preceding claims with the integrated EV charging interface, communicates via a wired or a wireless interface to a gateway or a controller device that collects metering data and sends commands to EVSE solid-state circuit breakers or the load equipment to adjust a power level to one or more loads within the distribution panel.

10. The EVSE solid-state circuit breaker according to any of the preceding claims with the integrated EV charging interface, wherein the integrated EV charging interface or an EVSE interface is located within a breaker enclosure allowing a solid-state circuit breaker without integrated EV interface to be replaced by a solid-state circuit breaker with an EV charging interface or a solid-state circuit breaker with an integrated EV charging interface to be replaced by a solid-state circuit breaker without an EV charging interface.

11. The EVSE solid-state circuit breaker according to any of the preceding claims with the integrated EV charging interface within its enclosure measures an internal temperature of the solid-state circuit breaker with an integrated EV charging interface and adjusting the power to the EV or disengaging based on a rate of change of temperature.

12. The EVSE solid-state circuit breaker according to any of the preceding claims, further disengages one of EV loads when current drawn exceeds a configured level.

13. The EVSE solid-state circuit breaker according to any of the preceding claimwith the integrated EV charging interface, allows power to flow to the EV in a controlled pattern and monitor abnormalities in a charging pattern to determine health of the battery and avoid thermal runaway conditions before the EV is allowed to charge at an intended rate.

14. A method, comprising:
providing an electric vehicle supply equipment -EVSE- solid-state circuit breaker - SSCB- with an integrated Electric Vehicle -EV- charging interface, in particular an EVSE solid-state circuit breaker according to any of the claims 1 - 9, being disposed within a distribution panel that allows power to and from an electric vehicle, wherein the EVSE solid-state circuit breaker further detects arcing on EV load connections or leakage current through ground and disengaging based on an arcing signature or leakage levels.

15. The method of claim 14,
wherein the integrated EV charging interface communicates via a wired or a wireless interface to other EVSE solid-state circuit breakers, allowing a power level to be adjusted to one or more loads, further limiting the peak demand at a site; and/or
wherein the integrated EV charging interface further monitors temperature on the load contacts or cable and adjusts the power or disengages when temperature limits are exceeded; and/or
wherein the integrated EV charging interface communicates via a wired or a wireless interface to a gateway or a controller device that collects metering data and sends commands to EVSE solid-state circuit breakers or the load equipment to adjust a power level to one or more loads within the distribution panel such that metering accuracy is enhanced with remote voltage sensing at the end of the Home Run Load Wires and voltage sensing information is communicated via a wired or a wireless interface to the device that supports meter function.
